# EUROPÄISCHE PATENTSCHRIFT

(11) **EP 3 612 807 B1**
(45) Veröffentlichungstag und Bekanntmachung des Hinweises auf die Patenterteilung: **28.06.2023**
(21) Anmeldenummer: 18719518.5
(22) Anmeldetag: 19.04.2018
(51) Int. Cl.: G01M 13/02, B62D 61/00, F16D 66/00, G01M 17/007

(54) **ACHSÜBERWACHUNGSSYSTEM EINES FAHRWERKES EINES NUTZFAHRZEUGES UND VERWENDUNG EINES ACHSÜBERWACHUNGSSYSTEMS**
AXLE-MONITORING SYSTEM OF A CHASSIS OF A UTILITY VEHICLE AND USE OF AN AXLE-MONITORING SYSTEM
SYSTÈME DE SURVEILLANCE D'ESSIEU D'UN TRAIN ROULANT D'UN VÉHICULE UTILITAIRE ET UTILISATION D'UN SYSTÈME DE SURVEILLANCE D'ESSIEU

(30) Priorität: 20.04.2017 DE 102017108363
(43) Veröffentlichungstag der Anmeldung: 26.02.2020
(73) Patentinhaber: SAF-HOLLAND GmbH, 63856 Bessenbach (DE)
(72) Erfinder: WALLMEIER, Stefan, 63773 Goldbach (DE); ROOS, Michael, 97828 Marktheidenfeld (DE)
(74) Vertreter: Müller Schupfner & Partner Patent- und Rechtsanwaltspartnerschaft mbB
(86) Internationale Anmeldenummer: PCT/EP2018/060047
(87) Internationale Veröffentlichungsnummer: WO 2018/193037

(56) Entgegenhaltungen:
- EP-A1- 0 307 634
- EP-A1- 3 242 118
- DE-A1- 2 553 350
- DE-A1- 10 223 190
- DE-T2- 60 313 698
- US-A- 5 959 365
- US-B2- 8 935 054

## Beschreibung

Die vorliegende Erfindung betrifft ein Achsüberwachungssystem eines Fahrwerkes eines Nutzfahrzeuges, insbesondere eines Fahrwerkes eines Lastkraftwagens, und die Verwendung eines Achsüberwachungssystems.

Die Achsen eines Lastkraftwagens, insbesondere die Fahrwerkssysteme eines Lastkraftwagens, erfahren im Laufe ihres Lebens eine Vielzahl von unterschiedlichen Belastungen. Diese Belastungen beeinflussen in erheblichem Umfang die Lebensdauer dieser Achsen. Vor allem sind daher für die Auslegung solcher Achsen genaue Kenntnisse über die tatsächlichen Belastungen von entscheidender Bedeutung. Beispielsweise erfahren die Achsen des Fahrwerks eines Nutzfahrzeuges bei Befahren unterschiedlicher Gelände unterschiedliche Belastungen. Die tatsächliche Belastung einer Achse eines Fahrwerks eines Nutzfahrzeuges hängt daher von dem befahrenen Untergrund, dem Fahrzeugtyp selbst, der jeweiligen Beladung des Nutzfahrzeuges, der Bereifung des Nutzfahrzeuges, als auch von Umgebungsbedingungen wie der Temperatur oder der Feuchte oder dergleichen ab. Ferner wird die Lebenserwartung eines Fahrwerksystems eines Nutzfahrzeuges auch durch die Fahrweise eines Fahrers oder die Fahrmanöver, die mit dem Nutzfahrzeug durchgeführt werden, bestimmt. Abhängig von den tatsächlichen Belastungen, die ein Nutzfahrzeug in einer Situation ausgesetzt ist, erfahren die Achsen des Fahrwerksystems also sehr unterschiedliche Belastungen. Wie bereits angedeutet, gehören dazu nicht nur Kräfte und Momente, sondern auch Temperatureinflüsse, Steinschlag oder Feuchte oder dergleichen. Eine Schädigung eines Fahrwerkssystems im Laufe des Lebens des Fahrwerksystems hängt daher sehr stark von der jeweiligen Belastung ab, aber auch vom Zusammenspiel einzelner Belastungen. So verursachen beispielsweise erhöhte einseitige Belastungen der Achsen überlagerte Biege- und Torsionsmomente, die bei der Auslegung zu berücksichtigen sind. Ebenso sind auch überlagerte korrosive Belastungen von Bedeutung. Diese führen nämlich zu deuptlich geringeren Lebensdauern der Bauteile. Ein Beispiel ist der Fall einer Spannungsriss-Korrosion. Für eine leichtbaugerechte und vor allem anwendungsfallgerechte Auslegung ist es daher notwendig, die tatsächlichen Belastungen auf die Achsen des Fahrwerksystems zu erfassen, zu dokumentieren und auszuwerten.

Aus dem Stand der Technik ist bekannt, zur Bereitstellung von Belastungsdaten für die Auslegung der Achsen einzelne Versuche durchzuführen. Versuchsdaten werden hierfür durch aufwendige Messverfahren in Einzelsituationen ermittelt und in einem Prüfprogramm übertragen oder es findet eine Qualifikation des Fahrwerksystems auf einer Prüfstrecke statt, welche die Lastfälle im Zeitraffer simulieren soll. Durch dieses Vorgehen wird sichergestellt, dass die Achsen unter den ermittelten Belastungen über der geplanten Produktlebensdauer einsatzfähig bleiben. Diese bei der Auslegung der Achsen berücksichtigten Versuchsbedingungen können jedoch nur einen Ausschnitt aus den verschiedenen unterschiedlichen Belastungen liefern. Mit anderen Worten, es werden nicht alle denkbaren Anwendungsfälle erfasst. Daher können die Achsen des Fahrwerksystems nur im Rahmen der getesteten Bedingungen ohne weitere Untersuchungen verwendet werden oder die Auslegung der Achsen erfordert zusätzliche Sicherheiten, was zu mehr Materialeinsatz und damit zu mehr Gewicht führt.

Ferner existieren bereits erste Anwendungen, die es erlauben, Daten während des Betriebes des Fahrwerksystems eines Nutzfahrzeuges zu erfassen und zu nutzen. Beispielsweise offenbart die US 4,086,576 die Überwachung der Achslast durch Überwachung der Durchbiegung. Beim Überschreiten einer vordefinierten Durchbiegung bedarf es der Ergreifung einer Maßnahme wie beispielsweise das Absenken einer zusätzlichen Achse.

Die US 6,578,648 berücksichtigt zusätzlich den Reifendruck. Dahingegen offenbart die US 6,286,992 B1 die Erfassung von Temperaturen an der Achse, um festzustellen, ob eine Schädigung der Achse vorliegt.

Die US 5 959 365 A1 zeigt eine Überwachungseinheit zum Detektieren von Problemen in Verbindung zu Rädern von Trucks oder Anhängern.

Die US 8 935 054 B2 betrifft ein Überwachungssystem zum Kontrollieren einer Liftachse eines Fahrzeugs, umfassend Mittel zum Erfassen der Fahrzeuggeschwindigkeit und der Richtung, sowie Mittel zum Erfassen des Gewichts auf der Liftachse.

Die EP 0 307 634 A1 betrifft eine Vorrichtung und einen Achskörper zum Messen, Aufzeichnen und Anzeigen wichtiger Betriebsdaten einer Anhängerachse. An dem Achskörper sind auf beiden Seiten zwischen Federauflage und Bremsbrücke Lastensensoren angeordnet, während in den Achsschenkeln Temperatursensoren angeordnet sind.

Die DE 102 23 190 A1 betrifft eine Tandem-antriebsachse umfassend zwei Treibachsen, die durch eine durchgehende Welle miteinander verbunden sind, wobei durch messen und Überwachen von Raddrehzahl oder Reifendruck Unterschiede in den Reifenrollradien ermittelt werden können.

Die DE 25 53 350 A1 betrifft ein Lastüberwachungssystem, mit dem sich die auf eine Fahrzeugachse einwirkende Belastung überwachen lässt.

Die EP 3 242 118 A1 befasst sich mit einem Sensorsystem zum Überwachen einer Achse.

Die DE 10 2009 020 428 A betrifft eine Vorrichtung und ein Verfahren für Mess- und/oder Prüfeinrichtungen für ein Schienenfahrzeug. Die Vorrichtung ist mit einer Welle oder an die Welle gekoppelt und umfasst Sensoren und Auswerteeinheiten. Die WO 2004 022 406 A1 betrifft ein Verfahren und eine Vorrichtung zur Zustandsüberwachung von Fahrwerken von Schienenfahrzeugen. Unterschiedlichste Sensoren sind an unterschiedlichen Orten des Schienenfahrzeugs angeordnet.

Die DE 603 13 698 T2 betrifft Fahrzeugwarnsysteme bzw. stellt ein System und ein Verfahren zum Sammeln von Fahrzeugzustandsinformation in einer nichtintrusiven Art für eine Schadens- und Benutzungsanalyse zur Verfügung. Unterschiedliche Sensoren sind dabei im Fahrzeug in verdeckten, unterschiedlichen Bereichen untergebracht.

Die WO 2017 191 313 A1) betrifft ein Achsüberwachungssystem eines Fahrzeuges. Verschiedene Sensoren sind dabei an verschiedenen Orten des Fahrwerksystems angebracht.

Die aus dem Stand der Technik bekannten Lösungen erlauben es jedoch nicht, einen vollständigen Überblick über die Belastungen und den Status des Fahrwerksystems über einen längeren Zeitraum hinweg zu ermitteln und aufzuzeichnen. Es ist daher Aufgabe der vorliegenden Erfindung, ein Achsüberwachungssystem eines Fahrwerkes eines Nutzfahrzeuges bereitzustellen, welches einen vollständigen Überblick über die tatsächlichen Belastungen und den Status des Fahrwerksystems über einen längeren Zeitraum ermittelt und aufzeichnet.

Diese Aufgabe wird gelöst mit einem Achsüberwachungssystem eines Fahrwerkes eines Nutzfahrzeuges gemäß Anspruch 1 sowie der Verwendung eines Achsüberwachungssystems nach Anspruch 11.

Erfindungsgemäß umfasst das Achsüberwachungssystem eines Fahrwerkes eines Nutzfahrzeuges, insbesondere eines Fahrwerkes eines Lastkraftwagens oder Anhängers, zur Erfassung von Daten mindestens einer Achse des Fahrwerkes mindestens einen Sensor zur Erfassung mindestens einer physikalischen Größe an der mindestens einen Achse, wobei der mindestens eine Sensor an der mindestens einen Achse angeordnet ist. Vorschlagsgemäß ist der mindestens eine Sensor konfiguriert, eine Mehrzahl an unterschiedlichen physikalischen Größen zu erfassen. Der mindestens eine Sensor kann beispielsweise als ein Array ausgebildet sein, auf dem unterschiedliche Sensoren, wie beispielsweise ein Drucksensor, ein Temperatursensor, ein Momentensensor oder dergleichen, angeordnet sind. Bevorzugt wird eine Mehrzahl an unterschiedlichen physikalischen Größen zeitgleich oder hintereinander erfasst. Dies hat den Vorteil, dass nicht nur einzelne Messgrößen erfasst werden, sondern eine Vielzahl an Messgrößen, die es erlauben, einen möglichst vollständigen Überblick über die Einsatzfälle der Achsen eines Fahrwerkes zu bekommen. Insbesondere kann durch Erfassung der physikalischen Größen ein Zusammenhang der physikalischen Größen untereinander ermittelt werden, sodass die Beeinflussung der Lebensdauer der Achsen auf Basis der verschiedenen physikalischen Größen darstellbar ist.

Bevorzugt ist der mindestens eine Sensor dazu konfiguriert, die Mehrzahl an unterschiedlichen physikalischen Größen zeitgleich und/oder nacheinander zu erfassen. Dies hat den Vorteil, dass unterschiedliche physikalische Größen in einer zeitlichen Chronologie erfasst werden können, wodurch die tatsächlichen Achsbelastungen im Laufe der Zeit aufgezeichnet werden können, und wodurch Zusammenhänge der physikalischen Größen untereinander ermittelt werden können.

Weiter bevorzugt ist der mindestens eine Sensor dazu konfiguriert, die Mehrzahl an unterschiedlichen physikalischen Größen kontinuierlich oder zu vorgegebenen Zeitpunkten zu erfassen. Abhängig von dem entsprechenden Einfluss der jeweiligen Belastung kann die dazugehörige physikalische Größe beispielsweise kontinuierlich erfasst werden, während durch eine Belastung, welche einen geringen Einfluss auf die Lebensdauer der Fahrwerkachsen hat, bevorzugt zu vorgegebenen Zeitpunkten erfasst werden. Dies hat den Vorteil, dass die Belastungen, geordnet nach ihrer Relevanz, entsprechend häufig erfasst werden. Auch kann ein Überblick über die Belastungen und den Status des Fahrwerkes zielgenauer aufgezeichnet und überwacht werden.

Erfindungsgemäß umfasst die Mehrzahl an unterschiedlichen physikalischen Grö-ßen mindestens die Erfassung einer Temperatur der Achse, Erfassung einer Materialspannung der Achse, und die Erfassung einer Geschwindigkeit, mit welcher die Achse bewegt wird.

Besonders bevorzugt umfasst die Mehrzahl an unterschiedlichen physikalischen Größen mindestens die Erfassung einer der folgenden physikalischen Größen:
- Erfassung eines an der Achse anliegenden Drucks,
- Erfassung einer an der Achse aufgetretenen Schwingung,
- Erfassung einer positiven oder einer negativen Beschleunigung, mit welcher die Achse beschleunigt oder gebremst wird,
- Erfassung von Standortdaten mittels GPS,
- Erfassung einer Feuchte an der oder um die Achse,
- Erfassung eines Luftdruckes an der Achse,
- Erfassung einer Fahrbahnstrecke, insbesondere eines Fahrbahngefälles oder einer Art der Fahrbahn,
- Erfassung von Materialveränderungen der Achse, insbesondere eines elektrischen Widerstands,
- Erfassung von Abständen oder Positionen der Achse zu einer Fahrbahn oder zu einer anderen Achse, und/oder
- Erfassung von Korrosion an der Achse.

Es wird folglich vorgeschlagen, ein Sensorspektrum zu erfassen, welches die unterschiedlichen Belastungen in unterschiedlichen Umgebungsbedingungen erfasst und entsprechend aufzeichnet. Bevorzugt werden die unterschiedlichen physikalischen erfassten Größen an eine Steuereinheit weitergegeben, welche konfiguriert ist, die unterschiedlichen erfassten physikalischen Größen auszuwerten, und zweckmäßigerweise an einem Monitor wiederzugeben. Insbesondere können die erfassten physikalischen Größen in einem Diagramm gegeneinander aufgetragen werden, wodurch weitere Zusammenhänge der physikalischen Größen untereinander ermittelt werden können.

Gemäß der vorliegenden Erfindung sind mehrere Sensoren zur Erfassung der unterschiedlichen physikalischen Größen an der mindestens einen Achse angeordnet. Es ist folglich denkbar, zu einem Array, auf dem mehrere Sensoren angeordnet sind, zusätzlich weitere Sensoren an der mindestens einen Achse anzuordnen, um ein möglichst vollständiges Sensorspektrum zu unterschiedlichen physikalischen Größen in Bezug auf eine Achse ermitteln zu können. Die Anordnung der Sensoren am Fahrwerk und die zum Einsatz kommenden Sensoren können folglich dem entsprechenden Zweck der Messung angepasst sein.

Bevorzugt ist der mindestens eine Sensor oder sind die mehreren Sensoren derart angeordnet und konfiguriert, dass eine Erfassung der unterschiedlichen physikalischen Größen an verschiedenen Stellen des Fahrwerkes oder an einer zentralen Stelle des Fahrwerkes erfolgt. Bei einer Erfassung der unterschiedlichen physikalischen Größen an verschiedenen Stellen des Fahrwerkes kann beispielsweise eine achsabhängige Belastung dokumentiert werden und achsabhängig ausgewertet werden. Durch die Möglichkeit einer achsabhängigen Auswertung der Belastung können folglich die Belastungen ortsaufgelöst wiedergegeben werden.

Bevorzugt umfasst das Achsüberwachungssystem ferner eine Steuerung zur Datenauswertung und/oder Datenweiterleitung. Erfindungsgemäß umfasst das Achsüberwachungssystem einen Speicher zur Speicherung der erfassten physikalischen Daten. Die Steuerung steht bevorzugt mit einem Monitor in Verbindung, auf welchem die ausgewerteten Daten einem Nutzer angezeigt werden können. Ferner können die in dem Speicher gespeicherten erfassten physikalischen Daten überschrieben und/oder ausgelesen werden. Ferner bevorzugt können in dem Speicher bzw. in der Steuerung vorgegebene Normen der jeweiligen physikalischen Größe hinterlegt sein.

Weiter bevorzugt ist die Steuerung ferner dazu konfiguriert, eine Fehlermeldung auszugeben, wenn eine Auswertung der erfassten physikalischen Größe ergibt, dass mindestens ein, insbesondere an einer Achse, erfasster Parameter einer physikalischen Größe von einer vorgegebenen Norm abweicht, welche insbesondere in dem Speicher oder der Steuerung hinterlegt ist. Bei Abweichung des erfassten Parameters einer physikalischen Größe von einer vorgegebenen in der Steuerung hinterlegten Norm kann dies einem Nutzer entsprechend auf einem Monitor angezeigt werden. Daraufhin können entsprechende Maßnahmen durchgeführt werden, um der Abweichung des erfassten Parameters der physikalischen Größe von der vorgegebenen Norm entgegen zu wirken. Hierdurch kann die Lebensdauer des Fahrwerkes verbessert werden.

Bevorzugt umfasst das Achsüberwachungssystem ferner eine Zugangssicherungseinheit, um den Zugriff der erfassten physikalischen Daten auf ausgewählte Personen oder ausgewählte externe Systeme zu beschränken. Die Zugangssicherungseinheit kann beispielsweise als eine Schnittstelle oder dergleichen ausgebildet sein. Die Zugangssicherungseinheit kann ferner als eine Bluetooth-Schnittstelle oder als eine WLAN-Schnittstelle oder dergleichen ausgebildet sein. Die erfassten physikalischen Daten können über die Zugangssicherungseinheit von ausgewählten externen Systemen ausgelesen werden. Bei den ausgewählten externen Systemen kann es sich beispielsweise um einen Computer (PDA) oder um ein Smartphone oder dergleichen handeln. Die Zugangssicherungseinheit ist bevorzugt passwortgesichert. Dies hat den Vorteil, dass der Zugriff der erfassten physikalischen Größen auf ausgewählte Personen bzw. ausgewählte externe Systeme beschränkt ist. Hierdurch kann ein Datenmissbrauch vermieden werden.

Bevorzugt werden die erfassten physikalischen Daten in definierten Gruppen, insbesondere geclustert, abgespeichert, um eine Reduzierung des Datenvolumens zu erreichen. Dies erlaubt, die erforderlichen physikalischen Daten in einer Langzeitmessung zu erfassen, welche in Gruppen gespeichert werden. Hierdurch wird erreicht, dass bei Abfrage einer bestimmten physikalischen Größe, diese in zeitlicher Chronologie schnell und einfach darstellbar ist. Ferner können physikalische Größen unterschiedlicher Gruppen zeitlich überlagert dargestellt werden. Hierdurch können beispielsweise Zusammenhänge bei unterschiedlichen Belastungen dargestellt werden. Dies ermöglicht eine detailliertere Darstellung der Belastungen. Bevorzugt wird eine erfasste physikalische Größe in Bezug auf eine Achse, in welche die physikalische Größe erfasst ist, ausgewertet und verarbeitet oder in Bezug auf alle Achsen des Fahrwerks zusammen ausgewertet und verarbeitet. Dies ermöglicht eine ortsaufgelöste Darstellung der Belastungen in dem Fahrwerkssystem. Bei entsprechenden Abweichungen der erfassten physikalischen Größen von der vorgegebenen gespeicherten Norm in der Steuerung kann folglich eine Maßnahme für die entsprechende Achse ergriffen werden, um der Achsbelastung entgegen zu wirken.

Bevorzugt weist jede Achse eine Achskennung auf, mit welcher die erfassten physikalischen Größen verknüpfbar sind oder mit welcher die Achsen in dem Fahrwerk des Nutzfahrzeuges verknüpfbar sind, um eine durchgehende Historie der einzelnen Achsen in dem Fahrwerk zu dokumentieren. Eine Achskennung kann hierbei als ein Barcode, QR-Code, RFID-Chip oder als eine Kennnummer an der jeweiligen Achse angeordnet sein. Es ist ferner denkbar, die Achskennung als ein an der Achse hinterlegten Computercode auszubilden. Ein Computercode hätte den Vorteil, dass die Achskennung von ausgewählten externen Systemen gelesen werden könnte. Ferner ermöglicht die Achskennung eine ortsaufgelöste Darstellung der erfassten physikalischen Größen.

Bevorzugt ist das Achsüberwachungssystem als autark arbeitende Einheit ausgebildet, welche einem Fahrwerkssystem eines Nutzfahrzeuges zugeordnet ist, oder wobei das Achsüberwachungssystem verschiedene Komponenten aufweist, welche wenigstens teilweise einer Zugmaschine des Nutzfahrzeuges zugeordnet sind, oder in einer Zugmaschine des Nutzfahrzeuges integriert sind. Vorzugsweise können Datensysteme oder Versorgungssysteme des Achsüberwachungssystems in der Zugmaschine integriert sein. Es ist aber auch denkbar, dass die Datensysteme oder Versorgungssysteme des Achsüberwachungssystems unabhängig von dem Datensystem oder Versorgungssystem des Nutzfahrzeuges ausgebildet sind. Insbesondere kann das Achsüberwachungssystem auf einen Nutzer zugeschnitten werden.

Besonders bevorzugt ist das Achsüberwachungssystem mit einem Warnsystem verbunden, welches nach einem Feststellen einer Abweichung eines erfassten Parameters einer erfassten physikalischen Größe von, insbesondere in der Steuerung hinterlegten, Sollwerten eine Warnmeldung ausgibt. Die Warnmeldung kann beispielsweise an einem Monitor ausgegeben werden, welcher mit der Steuerung verbunden ist oder werden kann. Durch Ausgeben einer Warnmeldung kann der Belastung einer Achse schnell entgegen gewirkt werden, indem entsprechende Maßnahmen zur Entlastung der entsprechenden Achse vorgenommen werden.

Bevorzugt kann das Achsüberwachungssystem auch an einem Anhänger montiert werden, welcher mit dem Nutzfahrzeug verbunden oder verbindbar ist. Das vorgeschlagene Achsüberwachungssystem kann folglich nicht nur an einem Nutzfahrzeug selbst, sondern auch an einem mit dem Nutzfahrzeug verbundenen Anhänger montiert sein, um die Achsen des Anhängers mit zu überwachen. Hierdurch können sämtliche Achsen des Nutzfahrzeuges, wie auch des Anhängers, kollektiv überwacht werden. Gegebenenfalls kann eine detektierte Fehlbelastung der Achsen des Anhängers hierdurch schnell behoben werden.

Ein weiterer Aspekt der vorliegenden Erfindung betrifft die Verwendung eines Achsüberwachungssystems, wie es zuvor beschrieben worden ist. Das Achsüberwachungssystem wird zur Wartung verwendet, um eine Vorhersage über wenigstens einen Teilverschleiß und/oder gegebenenfalls einen erforderlichen Austausch von Komponenten des Fahrwerks und/oder des Anhängers anzuzeigen. Durch die Verwendung des Achsüberwachungssystems zur Wartung kann die Lebenserwartung des Fahrwerksystems und/oder des Anhängers gesteigert werden. Weitere Vorteile und Merkmale der vorliegenden Erfindung ergeben sich aus der nachfolgenden Beschreibung bevorzugter Ausführungsformen mit Bezug auf die beigefügte Figur. Es versteht sich, dass einzelne in der Figur gezeigte Ausführungsformen Merkmale aufweisen können, die auch in anderen Ausführungsformen zum Einsatz gelangen können, auch wenn dies nicht explizit genannt ist und sofern dies nicht aufgrund technischer Gegebenheiten oder explizit ausgeschlossen wurde. Es zeigt:

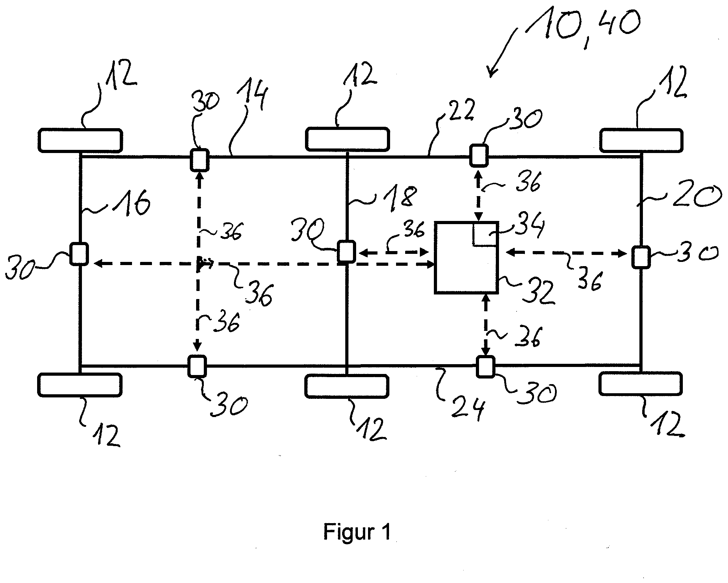

- Figur 1:: eine schematische Draufsicht auf ein Achsüberwachungssystem eines Fahrwerkes eines Nutzfahrzeuges.

Figur 1 zeigt eine schematische Draufsicht auf ein Nutzfahrzeug 10. Das Nutzfahrzeug 10 weist Reifen 12 auf, welche eine Fahrbahn (nicht dargestellt) berühren. Das Nutzfahrzeug 10 weist ein Fahrwerk 14 mit den Achsen 16, 18, 20, 22, 24 auf. An den verschiedenen Achsen 16-24 sind mehrere Sensoren 30 angeordnet. Die Sensoren 30 können zur Erfassung unterschiedlicher physikalischer Grö-ßen ausgebildet sein. Die Sensoren 30 können zur Erfassung einer Temperatur an der Achse, einer Materialspannung an der Achse, eines anliegenden Drucks an der Achse oder zur Erfassung einer Geschwindigkeit, mit welcher die Achse, insbesondere relativ zur Fahrbahn, bewegt wird, sei es eine konstante Geschwindigkeit oder eine positive oder negative Beschleunigung, ausgebildet sein. Ferner können die Sensoren 30 zur Ermittlung von Standortdaten mittels GPS ausgebildet sein. Es ist auch denkbar, dass die Sensoren 30 zur Erfassung einer Feuchte an oder um mindestens einer der Achsen 16-24, zur Erfassung eines Luftdruckes an einer der Achsen 16-24 oder zur Erfassung einer Materialänderung einer der Achsen 16-24, insbesondere durch Messung eines elektrischen Widerstandes ausgebildet sind. Eine Materialänderung könnte beispielsweise die Bildung von Korrosion an und/oder eine Dehnung und/oder eine Stauchung mindestens einer der Achsen 16-24 sein. Ferner könnte mindestens einer der Sensoren 30 zur Erfassung der Fahrbahnstrecke dienen, insbesondere zur Erfassung eines Fahrbahngefälles oder einer Art der Fahrbahn, wie beispielsweise der Erfassung von Asphalt oder der Erfassung von einem mit Kieselsteinen bedeckten Untergrund oder dergleichen. Ferner ist es denkbar, dass mindestens einer der Sensoren 30 zur Erfassung von Korrosion an einer der Achsen 16-24 oder zur Erfassung von Abständen einer Achse 16-24 zu der Fahrbahn oder zu einer anderen Achse 16-24 ausgebildet ist. In der Figur 1 ist ein Sensor 30 an jeder der Achsen 16-24 dargestellt. Es ist jedoch denkbar, dass an nur ausgewählten Achsen 16-24 mindestens ein Sensor 30 oder auch mehrere Sensoren 30 angeordnet sind. Der mindestens eine Sensor 30 oder die mehreren Sensoren 30 kommunizieren mit einer Steuerung 32. Die Steuerung 32 ist konfiguriert, die erfassten physikalischen Daten auszuwerten und/oder weiterzuleiten. Die Steuerung 32 umfasst ferner einen Speicher 34, in dem die erfassten physikalischen Daten gespeichert werden können bzw. in dem vorgegebene Normwerte der zu erfassenden Parameter einer physikalischen Größe hinterlegt sind. Die Steuerung 32 kann mit ausgewählten externen Systemen (nicht dargestellt) kommunizieren. Das Achsüberwachungssystem 40 umfasst hierfür eine Zugangssicherungseinheit in Form beispielsweise einer Schnittstelle, insbesondere einer passwortgesicherten Schnittstelle. Bevorzugt kann jeder der Sensoren 30 mit der Steuereinheit 32 kommunizieren, welches durch die Doppelpfeile 36 angedeutet ist.

### Bezugszeichen:

- 10: Nutzfahrzeug
- 12: Reifen
- 14: Fahrwerk
- 16-24: Achse
- 30: Sensor
- 32: Steuerung
- 34: Speicher
- 36: Kommunikationsrichtung
- 40: Achsüberwachungssystem

## Patentansprüche

1. Achsüberwachungssystem (40) eines Fahrwerkes (14) eines Nutzfahrzeuges (10), insbesondere eines Fahrwerkes (14) eines Lastkraftwagens oder Anhängers, zur Erfassung von Daten mindestens einer Achse (16-24) des Fahrwerkes (14),
wobei mehrere Sensoren (30) konfiguriert sind, eine Mehrzahl an unterschiedlichen physikalischen Größen zu erfassen,
**dadurch gekennzeichnet, dass** zur Reduzierung des Datenvolumens die erfassten physikalischen Daten in definierten Gruppen, insbesondere geclustert, abgespeichert sind,
wobei die Erfassung mindestens die folgenden physikalischen Größen umfasst: eine Temperatur der Achse, eine Materialspannung der Achse und eine Geschwindigkeit, mit welcher die Achse bewegt wird,
wobei die Sensoren (30) zur Erfassung der unterschiedlichen physikalischen Größen an der mindestens einen Achse (16-24) angeordnet sind,
wobei das Achsüberwachungssystem (40) ferner einen Speicher (34) zur Speicherung der erfassten physikalischen Daten umfasst,
wobei jede physikalische Größe eine Gruppe bildet.

2. Achsüberwachungssystem (40) nach Anspruch 1, wobei der mindestens eine Sensor (30) konfiguriert ist, die Mehrzahl an unterschiedlichen physikalischen Größen zeitgleich und/oder nacheinander zu erfassen und/oder die Mehrzahl an unterschiedlichen physikalischen Größen kontinuierlich oder zu vorgegebenen Zeitpunkten zu erfassen.

3. Achsüberwachungssystem (40) nach einem der vorhergehenden Ansprüche, wobei die Mehrzahl an unterschiedlichen physikalischen Größen mindestens die Erfassung einer der folgenden physikalischen Größen umfasst:
- Erfassung eines an der Achse anliegenden Drucks,
- Erfassung einer an der Achse aufgetretenen Schwingung,
- Erfassung einer positiven oder einer negativen Beschleunigung, mit welcher die Achse beschleunigt oder gebremst wird,
- Erfassung von Standortdaten mittels GPS,
- Erfassung einer Feuchte an der oder um die Achse,
- Erfassung eines Luftdruckes an der Achse,
- Erfassung einer Fahrbahnstrecke, insbesondere eines Fahrbahngefälles oder einer Art der Fahrbahn,
- Erfassung von Materialveränderungen der Achse, insbesondere eines elektrischen Widerstandes,
- Erfassung von Abständen oder Positionen der Achse zu einer Fahrbahn oder zu einer anderen Achse, und/oder
- Erfassung von Korrosion an der Achse.

4. Achsüberwachungssystem (40) nach einem der vorhergehenden Ansprüche, wobei die mehreren Sensoren (30) derart angeordnet und konfiguriert sind, dass eine Erfassung der unterschiedlichen physikalischen Größen an verschiedenen Stellen des Fahrwerkes (14) oder an einer zentralen Stelle des Fahrwerkes (14) erfolgt.

5. Achsüberwachungssystem (40) nach einem der vorhergehenden Ansprüche, wobei das Achsüberwachungssystem (40) ferner eine Steuerung (32) zur Datenauswertung und/oder Datenweiterleitung umfasst

6. Achsüberwachungssystem (40) nach Anspruch 5, wobei die Steuerung (32) dazu konfiguriert ist, eine Fehlermeldung auszugeben, wenn eine Auswertung einer erfassten physikalischen Größe ergibt, dass mindestens ein, insbesondere an einer Achse (16-24), erfasster Parameter einer physikalischen Größe von einer vorgegebenen Norm abweicht.

7. Achsüberwachungssystem (40) nach einem der vorhergehenden Ansprüche, wobei das Achsüberwachungssystem (40) ferner eine Zugangssicherungseinheit umfasst, um den Zugriff der erfassten physikalischen Daten auf ausgewählte Personen oder ausgewählte externe Systeme zu beschränken.

8. Achsüberwachungssystem (40) nach einem der vorhergehenden Ansprüche, wobei jede Achse (16-24) eine Achskennung aufweist, mit welcher die erfassten physikalischen Größen verknüpfbar sind oder mit welcher die Achsen in dem Fahrwerk (14) des Nutzfahrzeuges (10) verknüpfbar sind, um eine durchgehende Historie der einzelnen Achsen (16-24) in dem Fahrwerk (14) zu dokumentieren.

9. Achsüberwachungssystem (40) nach einem der vorhergehenden Ansprüche, wobei das Achsüberwachungssystem (40) mit einem Warnsystem verbunden ist, welches nach einem Feststellen einer Abweichung eines Parameters einer erfassten physikalischen Größe von, insbesondere in der Steuerung (32), hinterlegten Sollwerten, eine Warnmeldung ausgibt.

10. Achsüberwachungssystem (40) nach einem der vorhergehenden Ansprüche, wobei das Achsüberwachungssystem (40) an einem Anhänger montiert ist, welcher mit dem Nutzfahrzeug (10) verbunden ist.

11. Verwendung eines Achsüberwachungssystems (40) nach einem der vorhergehenden Ansprüche zur Wartung, um eine Vorhersage über wenigstens einen Teilverschleiß und/oder ggf. einen erforderlichen Austausch von Komponenten des Fahrwerkes (14) und/oder des Anhängers anzuzeigen.

## Claims

1. Axle monitoring system (40) of a chassis (14) of a commercial vehicle (10), in particular of a chassis (14) of a truck or trailer, for recording data of at least one axle (16-24) of the chassis (14),
wherein a plurality of sensors (30) are configured to detect a plurality of different physical variables,
**characterised in that**, in order to reduce the volume of data, the physical data acquired are stored in defined groups, in particular clustered,
wherein the detection comprises at least the following physical variables: a temperature of the axle, a material tension of the axle and a speed with which the axle is moved,
wherein the sensors (30) for detecting the different physical variables are arranged on the at least one axle (16-24),
wherein the axle monitoring system (40) further comprises a memory (34) for storing the detected physical data,
wherein each physical variable forms a group.

2. Axle monitoring system (40) according to claim 1, wherein the at least one sensor (30) is configured to detect the plurality of different physical varables simultaneously and/or sequentially and/or to detect the plurality of different physical variables continuously or at predetermined times.

3. Axle monitoring system (40) according to any one of the preceding claims,
wherein the plurality of different physical variables comprises at least the detection of one of the following physical variables:
- detection of a pressure applied to the axle,
- detection of a vibration occurring on the axle,
- detection of a positive or negative acceleration with which the axle is accelerated or braked,
- detection of location data by means of GPS,
- detection of humidity on or around the axle,
- detection of an air pressure at the axle,
- detection of a road distance, in particular a road gradient or a type of road,
- detection of material changes of the axle, in particular an electrical resistance,
- detection of distances or positions of the axle to a roadway or to another axle, and/or
- detection of corrosion on the axle.

4. Axle monitoring system (40) according to any one of the preceding claims, wherein the plurality of sensors (30) are arranged and configured such that detection of the different physical variables takes place at different locations of the chassis (14) or at a central location of the chassis (14).

5. Axle monitoring system (40) according to any one of the preceding claims, wherein the axle monitoring system (40) further comprises a controller (32) for data evaluation and/or data forwarding.

6. Axle monitoring system (40) according to claim 5, wherein the controller (32) is configured to output an error message if an evaluation of a sensed physical variable shows that at least one parameter of a physical variable sensed, in particular at an axle (16-24), deviates from a predetermined norm.

7. Axle monitoring system (40) according to any one of the preceding claims, wherein the axle monitoring system (40) further comprises an access control unit for restricting access of the acquired physical data to selected persons or selected external systems.

8. Axle monitoring system (40) according to any one of the preceding claims, wherein each axle (16-24) has an axle identifier with which the detected physical variables can be linked or with which the axles in the chassis (14) of the commercial vehicle (10) can be linked in order to document a continuous history of the individual axles (16-24) in the chassis (14).

9. Axle monitoring system (40) according to any one of the preceding claims, wherein the axle monitoring system (40) is connected to a warning system which outputs a warning message after a deviation of a parameter of a detected physical variable from setpoint values stored in particular in the controller (32) is detected.

10. Axle monitoring system (40) according to any one of the preceding claims, wherein the axle monitoring system (40) is mounted on a trailer which is connected to the commercial vehicle (10).

11. Use of an axle monitoring system (40) according to any one of the preceding claims for maintenance to indicate a prediction of at least partial wear and/or possibly a necessary replacement of components of the chassis (14) and/or the trailer.

## Revendications

1. Système de surveillance d'essieu (40) d'un train de roulement (14) d'un véhicule utilitaire (10), en particulier d'un train de roulement (14) d'un camion ou d'une remorque, pour l'acquisition de données d'au moins un essieu (16-24) du train de roulement (14),
dans lequel
plusieurs capteurs (30) sont configurés pour détecter une pluralité de grandeurs physiques différentes,
**caractérisé en ce que**
pour réduire le volume des données, les données physiques acquises sont mémorisées dans des groupes définis, en particulier en grappes,
la détection incluant au moins les grandeurs physiques suivantes : une température de l'essieu, une contrainte de matériau de l'essieu et une vitesse à laquelle l'essieu est déplacé,
les capteurs (30) destinés à détecter les différentes grandeurs physiques étant disposés sur ledit au moins un essieu (16-24),
le système de surveillance d'essieu (40) comprenant en outre une mémoire (34) pour stocker les données physiques acquises,
chaque grandeur physique formant un groupe.

2. Système de surveillance d'essieu (40) selon la revendication 1,
dans lequel ledit au moins un capteur (30) est configuré pour détecter ladite pluralité de grandeurs physiques différentes simultanément et/ou successivement et/ou pour détecter ladite pluralité de grandeurs physiques différentes en continu ou à des instants prédéterminés.

3. Système de surveillance d'essieu (40) selon l'une des revendications précédentes,
dans lequel la pluralité de grandeurs physiques différentes inclut au moins la détection de l'une des grandeurs physiques suivantes :
- détection d'une pression appliquée à l'essieu,
- détection d'une vibration survenue au niveau de l'essieu,
- détection d'une accélération positive ou négative avec laquelle l'essieu est accéléré ou décéléré,
- acquisition de données de localisation au moyen du GPS,
- détection d'une humidité au niveau ou autour de l'essieu,
- détection d'une pression d'air au niveau de l'essieu,
- détection d'un trajet de la chaussée, en particulier d'une pente de la chaussée ou d'un type de chaussée,
- détection de modifications de matériaux de l'essieu, en particulier d'une résistance électrique,
- détection de distances ou de positions de l'essieu par rapport à une chaussée ou à un autre essieu, et/ou
- détection de la corrosion au niveau de l'essieu.

4. Système de surveillance d'essieu (40) selon l'une des revendications précédentes,
dans lequel lesdits plusieurs capteurs (30) sont disposés et configurés de telle sorte qu'une détection des différentes grandeurs physiques s'effectue à différents endroits du train de roulement (14) ou à un endroit central du train de roulement (14).

5. Système de surveillance d'essieu (40) selon l'une des revendications précédentes,
dans lequel le système de surveillance d'essieu (40) comprend en outre une commande (32) pour l'évaluation des données et/ou la transmission des données.

6. Système de surveillance d'essieu (40) selon la revendication 5,
dans lequel la commande (32) est configurée pour émettre un message d'erreur lorsqu'une évaluation d'une grandeur physique détectée révèle qu'au moins un paramètre détecté d'une grandeur physique, en particulier au niveau d'un essieu (16-24), s'écarte d'une norme prédéfinie.

7. Système de surveillance d'essieu (40) selon l'une des revendications précédentes,
dans lequel le système de surveillance d'essieu (40) comprend en outre une unité de sécurisation d'accès pour limiter l'accès aux données physiques acquises à des personnes sélectionnées ou à des systèmes externes sélectionnés.

8. Système de surveillance d'essieu (40) selon l'une des revendications précédentes,
dans lequel chaque essieu (16-24) comporte un identifiant d'essieu auquel les grandeurs physiques détectées peuvent être associées ou auquel les essieux dans le train de roulement (14) du véhicule utilitaire (10) peuvent être associés, afin de documenter un historique continu des essieux individuels (16-24) dans le train de roulement (14).

9. Système de surveillance d'essieu (40) selon l'une des revendications précédentes,
dans lequel le système de surveillance d'essieu (40) est relié à un système d'alerte qui émet un message d'alerte après avoir constaté un écart entre un paramètre d'une grandeur physique détectée et des valeurs de consigne enregistrées en particulier dans la commande (32).

10. Système de surveillance d'essieu (40) selon l'une des revendications précédentes,
dans lequel le système de surveillance d'essieu (40) est monté sur une remorque qui est reliée au véhicule utilitaire (10).

11. Utilisation d'un système de surveillance d'essieu (40) selon l'une des revendications précédentes pour la maintenance, afin d'indiquer une prévision relative à au moins une usure partielle et/ou le cas échéant à un remplacement nécessaire de composants du train de roulement (14) et/ou de la remorque.
